# EUROPEAN PATENT SPECIFICATION

(11) **EP 2 144 750 B1**
(45) Date of publication and mention of the grant of the patent: **26.06.2013**
(21) Application number: 08735847.9
(22) Date of filing: 04.04.2008
(51) Int. Cl.: B32B 3/12, B29C 70/74, B29L 31/60

(54) **METHOD AND MACHINE FOR CARRYING OUT CUTS WITH EDGE BANDS IN HONEYCOMB SANDWICH PANEL**
VERFAHREN UND MASCHINE ZUR AUSFÜHRUNG VON SCHNITTEN MIT UMLEIMERN BEI EINER WABENVERBUNDPLATTE
PROCEDE ET MACHINE PERMETTANT D'EFFECTUER DES COUPES AVEC DES ALAISES EMBREVEES DANS UN PANNEAU SANDWICH EN NID D'ABEILLES

(30) Priority: 06.04.2007 IT PS20070015; 31.12.2007 IT PS20070042
(43) Date of publication of application: 20.01.2010
(73) Proprietor: BIESSE S.p.A., 61100 Pesaro (PU) (IT)
(72) Inventor: Canti, Max, 61012 Gradara (PU) (IT)
(74) Representative: Negrini, Elena
(86) International application number: PCT/EP2008/054107
(87) International publication number: WO 2008/122616

(56) References cited:
- EP-A- 1 574 264
- GB-A- 2 000 465
- US-A- 4 378 170

## Description

### TECHNICAL FIELD

The present invention refers to the working of the sandwich panels and in particular it refers to a method and a machine for carrying out cuts with edge bands in honeycomb sandwich panels and it refers to the panels obtained thereby.

### BACKGROUND ART

There are known honeycomb sandwich panels having big dimensions, more and more appreciated and used, fit to be cut in the right dimensions for carrying out shutters, shelves and structural elements of vehicles and furniture in general. Said sandwich panels comprise two plates or sheets, which constitutes the main faces thereof, mutually spaced and fixed by an interposed honeycomb ele ment.

In the sandwich panels for furniture and furnishings generally the plates or sheets are made of wood fibres and the honeycomb element is made of impregnated cardboard while in the aeronautics, nautical, vehicular, lift and similar application, said plates and elements may be made of aluminium or its alloys or in compound materials.

The known methods and machines for cutting the sandwich panels provides to carry out the cut by known means and, subsequently, to apply to the cut borders lists, edges or similar, made of wood or plastic, fit to occludes the interspace between the plates, to provide continuity to the panel surface. The lists and edges fixing is made by known edge-banding machines.

A drawback of said known methods and machines, if applied to existent plant, consists in that they require a lot of additional space often not available.

Another drawback of said known methods and of some edge-banding machines consists in that they require plates being very thick in order to realize, in said thickness, housings and joints for lists.

Further drawback of the known methods and machines consists in that they carry out breakable edge bands not suitable to contrast possible blunt strokes.

Another drawback of the known methods and machines consists in that they carry out honeycomb sandwich panels which cannot house pintles, locks, hinges, and generally hardware. Further drawback of the known methods and machines consists in that they are not fit to realize panels provided with shaped perimeters.

Further drawback of the known methods and machines consists in that they are not fit to make panels provided with workable perimeters in order to obtain toroidal ornamental shapes or any other profile.

Documents US-A-4378170 and GB-A-2000465 disclose methods for carrying out a cut with edge bands is a honeycomb sandwich panel provided with two plates defining the main faces of the panels and blocked mutually parallel and spaced by a honeycomb means.

### DISCLOSURE OF THE INVENTION

An object of the present invention is to propose a method and a machine in order to realize cut with edge bands in honeycomb sandwich panels where the cut edges of the panel have respective perfectly adherent and aligned edge bands.

Another object is to realize with only a machine the cut and the edge bands of the cut edges of an honeycomb sandwich panel also having big dimensions.

Another object is to provide a machine having little dimensions, which may be integrated in pre-existent plants without increasing a lot the overall dimensions.

A further object is to carry out cuts and edge bands also curved and shaped for obtaining cut and edged panels of almost any shape.

Another object is to obtain edge bands perpendicular to the panel faces, with rounded edges, toroidal or with transversal section shaped for obtaining ornamental effects.

Further object is to obtain edges with reduced overall dimensions and resistant to the strokes, provided with surface suitable for the gluing of finishing sheets or plates.

According to the invention, these objects are achieved by the method defined in claim 1 and by the machine defined in claim 18.

Other object is to propose honeycomb sandwich panels with band edges that are solid perimetrical lists, having various density and made of different materials, also shaped, having high dimensions and structural capacity fit to build a loadbearing frame suitable to support locks, hinges, connections and hardware elements in general.

### BRIEF DESCRIPTION OF THE DRAWINGS

The characteristics of the invention are underlined in the following with particular reference with the attached drawings, in which:
- figure 1 shows a schematic, frontal, section view of the machine, object of the present invention, for carrying out cuts with edge bands in sandwich panels;
- figure 2 shows a schematic top view of the machine of figure 1;
- figure 3 and 4 show plan and cross section views of a variant of the machine of figure 1;
- figure 5 shows an enlarged view of a particular of figure 3 where some portions have been removed for highlighting other portions.

### BEST MODE OF CARRYING OUT THE INVENTION

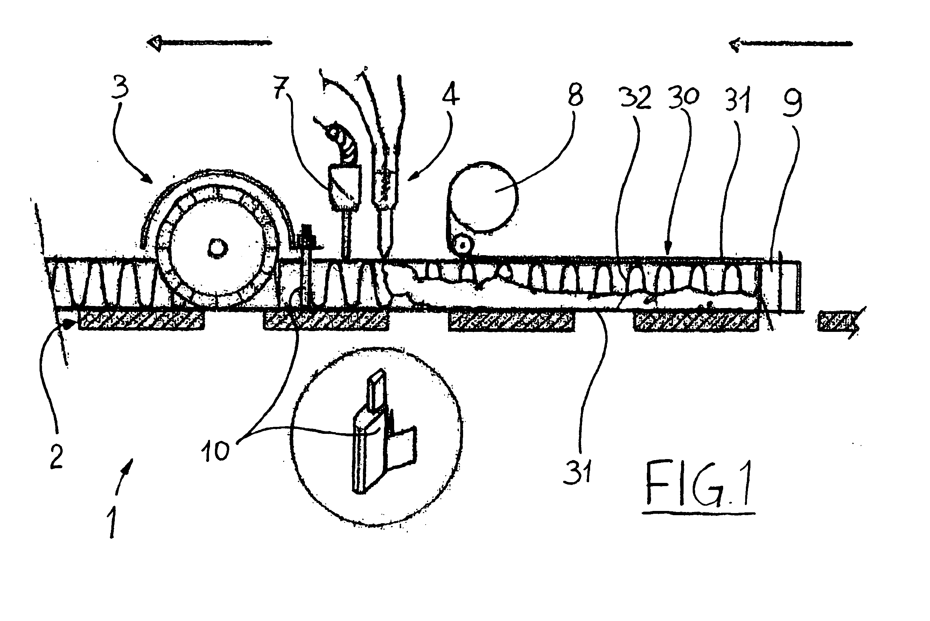

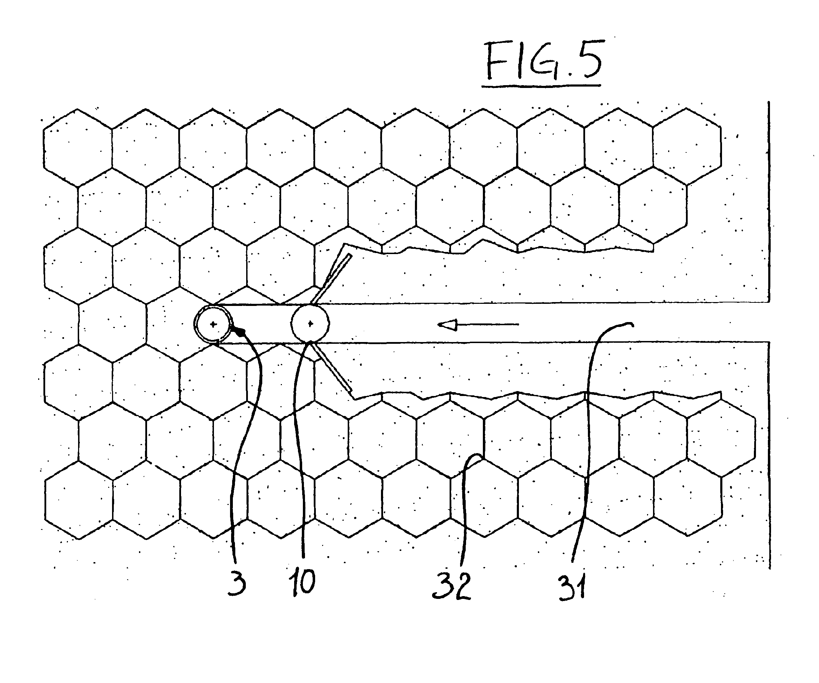

Referring to the figures 1-5, the method for realizing at least a cut with edge bands, object of the present invention, in a honeycomb sandwich panel 30 provided with two plates 31 defining the main faces of the panel and mutually blocked, in a parallel and spaced manner, by a honeycomb means 32 provides:
- to carry out onto one of the plates 31 at least a groove having a predetermined width and having a depth at least equal to the thickness of the plate 31 and smaller than the panel 30 thickness, where the median line of said groove reproduces the predetermine development of the at least a cut to be carried out in the panels;
- to open wide the honeycomb means laterally to the groove;
- to heat the inside of the grooves by means of hot air or infrared radiation or other heating systems:
- to introduce into the panel 30 through the whole longitudinal development of said groove a predetermined quantity of a filling material having a fluidic behaviour, and/or similar behaviour, and fit to get hard, for filling at least the volume between the plates near the groove;
- to wait and/or to cause the hardening of the filling material;
- to carry out the at least a cut along its predetermined development of the median line of the groove, where said cut has a smaller width than the minimum one of the filling hardened material for obtaining the edge banding of the cut edges with the hardened material

In case of injection or spray introduction, it is provided to make the grooves onto the plate 31 leaving untouched, besides the opposite plate 31, a predetermined thickness of honeycomb 32 adjacent to said opposite plate in order to contain the material splattering.

The groove width is determined by the dimensions of the tools used in the steps following the cut of the groove and the width of the wide opening may be adjusted for making a edge band suitable only to the finishing of the cut or subsequent workings, for instance ornamental milling, or in order to house hardware elements.

The heating allows to speed up the hardening of the introduced material.

The predefined quantity of material is determined mainly by the wide opening width, by the distance between the plates and by the length of the groove.

The introduction occurs dispensing the material along the groove and the flow is adjusted depending on the speed along the groove.

In order to speed up the operations, it is provided to make a plurality of grooves and introductions while the filling material previously introduced gets hard.

In order to carry out straight grooves the use of disc cutting means is provided, in order to make straight and curved grooves the use of milling means, as an example end mill tools, is also provided

The method provides to use side containing means, for instance ring belts, matching the panel edges in which the grooves end, in order to prevent side flowing out of the filling material in the fluid state.

Optionally the method provides to use filling material of the expanding type and, after the filling of grooves with expanding material, to occlude said grooves up to the solidification of the material at least by means of a closed ring belt, for instance of a moving belt type press, pressed against the grooved face.

In order to prevent the adhesion of the expanding material, the method provides to use an anti-adherent belt and/or to apply to the groove edges an adhesive tape in order to prevent the adhesion of the expanding material to the belt. The adhesive tape further avoids to soil the plate 31.

The filling material may comprise, besides the fluid and hardening portion, a solid portion, having behaviour similar to the fluidic behaviour, as an example granular or fragmented materials. The fluid and hardening portion is preferably of resinous type, for instance bi-component with very low viscosity non expanding or slightly expanding resin. The fluid and hardening resin, after the hardening, binds the solid portion incorporating it in a matrix, and adheres to the inner faces of the plates 31 of the panel 30.

The method provides the preferential use of a solid granular portion made of hollow glass granules which are lightweight, resistant and easy to be permeated by the fluid portion of the material and fit to provide a finished surface easy to be glued or painted.

The method provides to introduce the solid granular portion into the groove and, successively to introduce into said groove a predetermined quantity of fluid portion.

The introduction of the solid portion occurs distributing a predetermined quantity of solid granular portion into the groove or making the opening of an hopper, containing said solid granular portion, slide onto the plate 31 having the groove, in order to let the solid granular portion to fall by gravity from the hopper into the groove.

Apart from the expandability of the resin or of the solid material use, the method provides to use a fluid bicomponent material with fast hardening mixed immediately before the introduction.

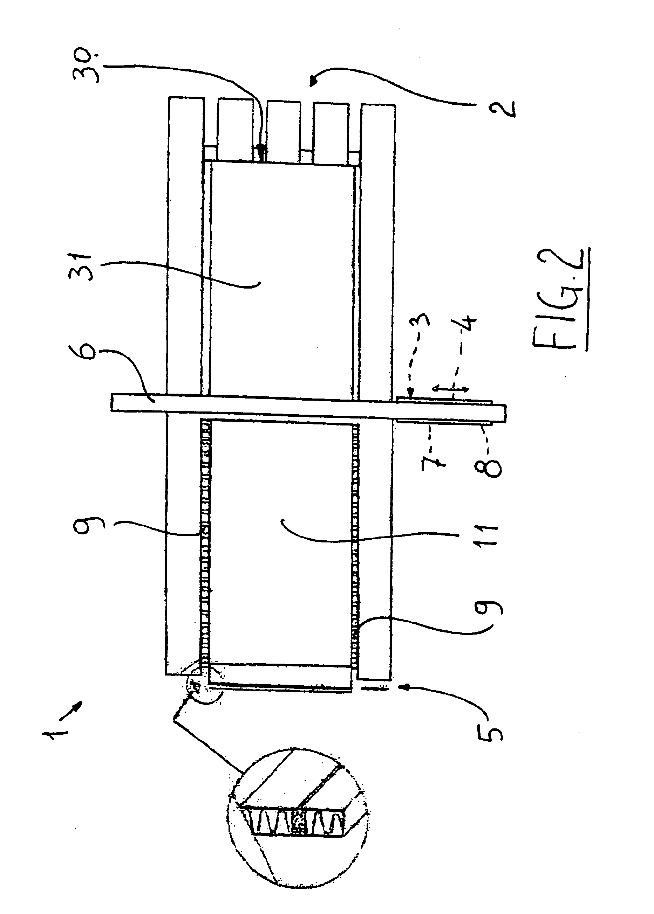

The first embodiment of figures 1 and 2 of the machine 1 for carrying out cuts with edge bands in honeycomb sandwich panels 30 with plates 31 and with an interposed honeycomb means 32, comprises at least:
- a support means 2, for instance a grooved plane, fit to match at least a plate 31 for supporting the respective panel 30 and provided with advancing means, preferably of the pushing type, for the plate 31 and with side ring closed belts 9 fit to match the side edges of the plate 31 parallel to the advancing direction thereof;
- first cutting means 3 fit to carry out, onto a plate 31 opposite to the plate matching with the support means 2, at least a groove of a predetermined width and having depth equal at least to the plate 31 thickness and smaller than the panel 30 thickness, where the median line of said groove reproduces the predetermined development of the at least a cut to be made in the panel;
- introduction means 4 fit to introduce into the panel 30 along the whole longitudinal development of said groove a filling material having fluid behaviour, and/or similar behaviour, and fit to get hard, in predetermined quantity for filling at least the volume between the plates near to the groove;
- second cutting means 5 for making the at least a cut along its predetermined development, where said cut has smaller width than the minimum one of the hardened filling material, for obtaining the edge banding of the cut edges.

The first cutting means 3 comprise a disc means mobile at least in a cutting direction abng a first arm 6 placed transversally in respect to the panel 30 advancing direction.

The machine 1 comprises an opening wide means 10, fixed downstream of the first cutting means 3 in respect to the cutting direction, and fit to open wide the honeycomb means 32 laterally in respect to the groove.

The opening wide means 10 comprises a pair of opening wide fins of the honeycomb means 32 placed like a "V" having vertex in the cutting direction or a wedge with vertex in the cutting direction.

The introducing means 4 comprise a mixer fed of the resinous component by means of flexible ducts for the connection to respective tanks, and a dispenser of the fluid filling material.

The mixer and the dispenser are mobile along the first arm 6 to which they are connected downstream of the wide opening means 10 in respect to the cutting direction.

The machine optionally comprises also heating means 7, of the Leister hot air type or infrareds or similar, fit to heat the panel inside the groove.

The heating means 7 are mobile at least along the first transversal arm 6 immediately upstream of the dispenser of the introducing means 4 in respect to the cutting direction.

In case of using filling expanding material, the machine 1 may comprise an optional tape unrolling means 8, fit to occlude the groove adhering to the edges thereof, and mobile along the first transversal arm 6 immediately downstream of the dispenser of the introducing means 4 in respect to the cutting direction.

The machine may comprise a closed ring belt press 11 and placed downstream of the first transversal arm 6 in order to prevent the filling expanding material from coming out from the groove and to detach the possible tape.

The second cutting means 5 are placed downstream of the belt press 11 and are of the disc-like blade type.

The first arm 6 may be connected to the first cutting means 3, to the wide opening means 10, to the trating means 7, to the introducing means 4 and to the unrolling means 8 by means of motorized truck mobile along it in the cut direction and in the opposite direction.

The first arm 6 may be fixed or mobile in the advancing direction of the panel.

The machine 1 may comprise also programmable control means, for instance of the microprocessor type, in order to control the arm 6, the cutting means 3, 5 and the introducing means 4 in order to cany out straight cuts with edge bands transversal and/or longitudinal.

The operation of the machine allows to carry out a plurality of transversal cuts with edge bands; each element, cut off from the panel, may be introduced again in the machine 1 after a 90° rotation around a vertical axis, in order to carry out further cuts perpendicular to the first ones.

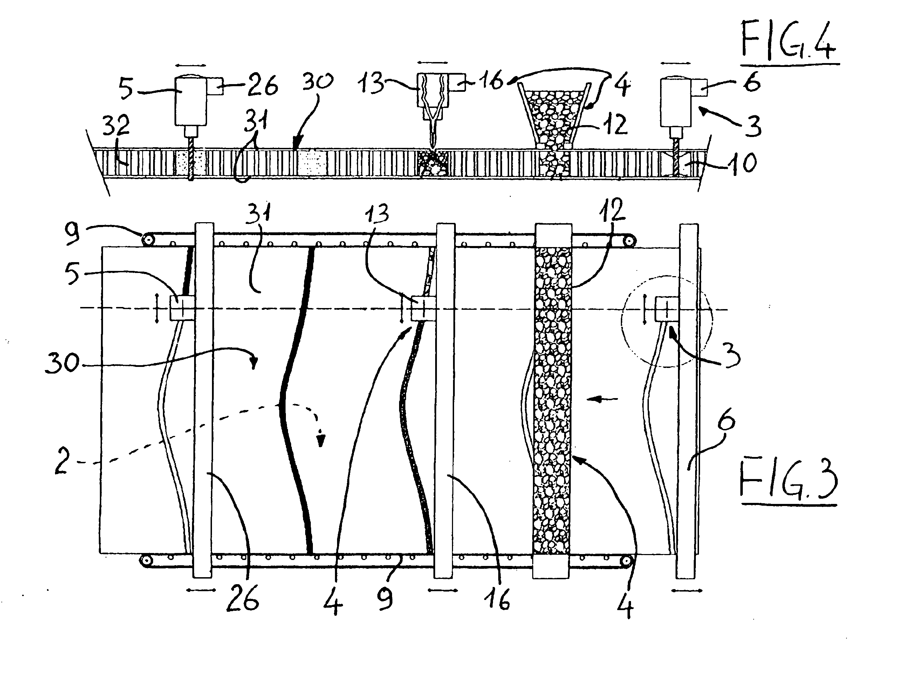

In the variant of figures 3-5 of the machine 1, the first cutting means 3 comprises a milling means transversally and longitudinally moved by a first arm 6 having two freedom degrees on a horizontal plane, and placed transversally in respect to the advancing direction of the panel 30.

The longitudinal dimension of the mill of the first cutting means 3 is such as that it cuts the upper plate 31 and, whole or partially, the thickness of the honeycomb means 32 but it cannot cut the other plate 31.

The introduction means 4 comprise a transversal hopper 12 for a solid portion of the material having behaviour similar to the fluid behaviour. The hopper 12 may be provided in the top with a flexible tank, as an example a bag type one, or may be supplied, by connecting ducts, connected to a storage bin of the granular material.

The hopper 12 is placed downstream of the first cutting means 3 and it has an opening opened in a matching sliding condition in respect to the plate 31 provided with the groove which is filled during its relative motion in respect to said opening.

The introduction means 4 further comprise a mixer and a dispenser 13 of a fluid portion of the filling material The mixer is moved transversally and longitudinally by means of a second arm 16 having two freedom degrees and placed transversally in respect to the advancing direction of the panel 30 and downstream of the transversal hopper 12 in respect to the advancing direction of the panel 30.

The second cutting means 5 comprises a cutting milling means having a length suitable to cut the whole panel 30 thickness and moved transversally and longitudinally by a third arm 26 placed transversally in respect to the advancing direction of the panel 30 and downstream to the introduction means 4.

Also this embodiment of the machine 1 comprise two side containing means 9, for instance side closed ring belts, fit to match with the side edges 31 parallel to the advancing direction thereof. The machine 1 further comprises a wide opening means 10, fixed downstream of the first cutting means 3 in respect to the cutting direction, fit to wide open the honeycomb 10 laterally in respect to the groove.

The wide opening means 10 may comprise a pair of fins placed like a "V" or a wedge, having vertex in the cutting direction.

The second embodiment of the machine 1 comprises control means, of the microprocessor type, managed by a program for carrying out cuts with edge bands straight or with any shape, also circular or any closed shaped cut.

Alternatively, the invention provides to install the first 3 and second 5 cutting means, the opening wide means 10, the introduction means 4, and optionally the heating means 7 and tape unrolling means 8 on one or more heads of CNC machine, controlled machine tool, working centre machine or the like. The support means of said machines can be provided with the side containing means 9, closed ring belt press 11.

The introduction means 4 can comprise the mixer and the dispenser and, possibly the hopper 12. The cutting means may be of the disc or end mill type.

The cut panel is provided with two plates 31 defining the main faces of the panel 30. The two plates 31 are mutually blocked in a parallel and spaced manner by a honeycomb means 32. The cut panel comprises at least a side cut end, straight or curved, provided with a solid edge band comprised between the two plates 31 and adherent thereto.

The solid edge band is made of a hardened filling material comprising a bi-component hardened resin. The solid granular portion of the filling material comprises preferably hollow glass granules.

The solid edge band may be orthogonal to the plates or may be milled or shaped in a toroidal shape, or with other ornamental shape, and/or it may be painted.

Alternatively the solid edge band may have perforated or milled housings for connectors, hinges, locks or hardware elements in general.

Another variant may provide that the solid edge band has a film, sheet, tape or other coating or finishing element glued to the edge band.

The whole perimeter of the cut panel can be provided with the solid edge band and its plan view can be polygonally, circularly or elliptically or curved shaped.

An advantage of the present invention is to provide a method and a machine in order to realize cut with edge bands in honeycomb sandwich panels where the cut edges of the panel have respective perfectly adherent and aligned edge bands.

Another advantage is to realize with only a machine the cut and the edge bands of the cut edges of an honeycomb sandwich panel also having big dimensions.

Another advantage is to provide a machine having little dimensions, which may be integrated in pre-existent plants without increasing a lot the overall dimensions.

A further advantage is to carry out cuts and edge bands also curved and shaped for obtaining cut and edged panels of almost any shape.

Another advantage is to obtain edge bands perpendicular to the panel faces, with rounded edges, toroidal or with transversal section shaped for obtaining ornamental effects.

Further advantage is to obtain edges with reduced overall dimensions and resistant to the strokes, provided with surface suitable for the gluing of finishing sheets or plates.

Other advantage is to provide honeycomb sandwich panels with band edges that are solid perimetrical lists, having various density and made of different materials, also shaped, having high dimensions and structural capacity fit to build a loadbearing frame suitable to support, locks, hinges, connections and hardware elements in general.

## Claims

1. Method for carrying out a cut with edge bands in a honeycomb sandwich panel (30) provided with two plates (31) defining the main faces of the panels and blocked mutually parallel and spaced by a honeycomb means (3) comprising:
- carrying out onto one of the plates (31) at least a groove having a predetermined width and having a depth at least equal to the thickness of the plate and smaller than the panel thickness, where the median line of said groove reproduces the predetermined development of the at least a cut to be carried out in the panels;
- introduce into the panel (30) through the whole longitudinal development of said groove a filling material having a fluidic behaviour, and/or similar, and fit to get hard, in a predetermined quantity for filling at least the volume between the plates near the groove;
- waiting and/or causing the hardening of the filling material;
- carrying out the at least a cut along its predetermined development, where said cut has a smaller width than the minimum one of the filling hardened material for obtaining the edge banding of the cut edges.

2. Method according to claim 1 **characterized in** making the grooves onto a plate, leaving untouched, besides the opposite plate, a predetermined thickness of the honeycomb means (3) adjacent to said opposite plate.

3. Method according to claim 1 or 2 **characterized in** opening wide the honeycomb means laterally to the groove after the carrying out of the groove and before introducing the filling material

4. Method according to any of the previous claims **characterized in** heating the inside of the grooves by means of hot air or infrared radiation or similar, before the introduction in order to speed up the hardening.

5. Method according to any of the previous claims **characterized in** carrying out a plurality of grooves and introductions while the filling material previously introduced get hard

6. Method according to any of the previous claims **characterized in** carrying out a plurality of straight grooves by means of a disc cutting means or carrying out a plurality of straight and/or curved grooves by milling means, as an example end mill tools.

7. Method according to any of the previous claims **characterized in** using side containing means, matching the panel edges in which the grooves end, in order to prevent side flowing out of the filling material in the fluid state.

8. Method according to any of the previous claims **characterized in** using filling material of the expanding type.

9. Method according to the claim 8 **characterized in** after the filling of grooves with expanding material, to occlude said grooves up to the solidification of the material at least by means of a closed ring belt.

10. Method according to the claim 9 **characterized in** using an anti-adherent belt in order to prevent the adhesion of the expanding material thereon.

11. Method according to the claim 9 **characterized in** applying to the groove edges an adhesive tape in order to prevent the adhesion of the expanding material to the belt.

12. Method according to any of the previous claims **characterized in** using a filling material comprising a solid portion, having behaviour similar to the fluidic behaviour, and a fluid hardening portion.

13. Method according to the claim 12 **characterized in** using a granular solid portion preferably made of hollow glass granules.

14. Method according to the claim 12 **characterized in** using a fluid portion of resinous type, for instance bi-component with very low viscosity non expanding or slightly expanding.

15. Method according to any of the claims 12-14 **characterized in** introducing the solid granular portion into at least a groove and, successively introducing into said at least a groove a predetermined quantity of fluid portion.

16. Method according to the claim 15 **characterized in** distributing a predetermined quantity of solid granular portion into the groove or making the opening of an hopper, containing said solid granular portion, slide onto the plate (31) having the groove, in order to let the solid granular portion to fall by gravity from the hopper into the groove.

17. Method according to any of the previous claims **characterized in** using a fluid bi-component material which gets hard quickly, mixed immediately before the introduction.

18. Machine for carrying out cuts with edge bands by the method of any of the previous claims, in honeycomb sandwich panel (30) each one provided of two plates (31) defining the main faces and blocked mutually parallel and spaced by a honeycomb means (32); said machine (1) comprising:
- a support means (2) fit to match at least a plate (31) for supporting the respective panel (30);
- first cutting means (3) fit to carry out, onto a plate (31) opposite to the plate matching with the support means, at least a groove of a predetermined width and having depth equal at least to the plate thickness and smaller than the panel thickness, where the median line of said groove reproduces the predetermined development of the at least a cut to be made in the panel;
- introduction means (4) fit to introduce into the panel (30) along the whole longitudinal development of said groove a filling material having fluid behaviour, and/or similar behaviour, and fit to get hard, in predetermined quantity for filling at least the volume between the plates near to the groove;
- second cutting means (5) for making at least a cut along its predetermined development, where said cut has smaller width than the minimum one of the hardened filling material, for obtaining the edge banding of the cut edges.

19. Machine according to the claim 18 **characterized in that** the support means (2) is provided with advancing means for the at least a plate (31) and with side containing means (9), for instance side closed ring belts, fit to match with the lateral edges of the plate (31) parallel to the advancing thereof.

20. Machine according to the claim 19 **characterized in that** the first cutting means (3) comprise a disc means mobile at least in a cutting direction along a first arm (6) placed transversally in respect to the panel (30) advancing direction.

21. Machine according to the cla im 20 **characterized in that** the introducing means (4) comprise a mixer and a dispenser of the fluid filling material, mobile along the first transversal arm (6) or along a second transversal arm (16) placed downstream of the first arm (6) in respect to the advancing direction of the at least a panel (30).

22. Machine according to the claim 20 or 21 **characterized in that** it comprises heating means (7), of the hot air type or similar, fit to heat the panel inside the groove, and mobile at least along the first transversal arm (6) immediately upstream of the dispenser of the introducing means (4) in respect to the cutting direction.

23. Machine according to any of the claims 20-22 **characterized in** comprising a tape unrolling means (8), fit to occlude the groove adhering to the edges thereof, and mobile along the first transversal arm (6) immediately downstream of the dispenser of the introducing means (4) in respect to the cutting direction.

24. Machine according to any of the claims 21-23 **characterized in** comprising a closed ring belt press (11) and placed downstream of the first transversal arm (6) in order to prevent the filling expanding material from coming out from the groove.

25. Machine according to claim 24 **characterized in that** the second cutting means (5) is placed downstream of the belt press (11) and are of the disc-like blade type.

26. Machine according to claim 19 **characterized in that** the advancing means are preferably of the pushing type.

27. Machine according to claim 20 **characterized in that** the first cutting means (3) comprises a milling means transversally and longitudinally moved by a first arm (6) having two freedom degrees placed transversally in respect to the advancing direction of the panel (30).

28. Machine according to the claim 27 **characterized in that** the introduction means (4) comprise a transversal hopper (12) for a solid portion of the material having behaviour similar to the fluid behaviour, placed downstream of the first cutting means (3) and having an opening opened in a matching sliding condition in respect to the plate (31) provided with the at least a groove; said introduction means (4) further comprise a mixer and a dispenser (13) of a fluid portion of the filling material and moved transversally and longitudinally by means of a second arm (16) having two freedom degrees placed transversally in respect to the advancing direction of the panel (30) and downstream of the transversal hopper (12) in respect to the advancing direction of the panel (30).

29. Machine according to the claim 27 **characterized in that** the second cutting means (5) comprises a milling means for cutting, moved transversally and longitudinally by a third arm (26) placed transversally in respect to the advancing direction of the panel (30) and downstream to the introduction means (4).

30. Machine according to any of the claims 27-29 **characterized in that** it comprises at least two side containing means (9), for instance side closed ring belts, fit to match with the side edges (31) parallel to the advancing direction thereof.

31. Machine according to any of the claims 20-23 or any of the claims 27-30 **characterized in that** it comprises an opening wide means (10), fixed downstream of the first cutting means (3) in respect to the cutting direction, and fit to open wide the honeycomb means (32) laterally in respect to the groove.

32. Machine according to the claim 31 **characterized in that** the opening wide means (10) comprises a pair of opening wide fins of the honeycomb means placed like a "V" having vertex in the cutting direction or a wedge with vertex in the cutting direction.

33. Machine according to the previous claims from 18 to 32 **characterized in that** it comprises control means which may be programmed in order to control at least the arms (6, 16, 26), the cutting means (3, 5) and the introducing means (3) in order to make transversal and/or longitudinal straight or curved cuts with edge bands.

34. Machine according to the claim 33 **characterized in that** the control means comprise a program for realizing cut with edge bands straight or with any shape, also circular or any closed shaped cut.

## Patentansprüche

1. Ein Verfahren zum Ausführen eines Schnitts mit Umleimem in einem Wabenverbundpaneel (30), das mit zwei Platten (31) bereitgestellt ist, die die Hauptseiten der Paneele definieren und gegenseitig parallel gesperrt und beabstandet sind durch ein Wabenmittel (3), umfassend:
- Ausführen mindestens einer Rille auf einer der Platten (31) mit einer vorbestimmten Breite und mit einer Tiefe, die zumindest gleich der Dicke der Platte und schmaler als die Paneeldicke ist, wobei die Mittellinie der Rille die vorbestimmte Entwicklung des mindestens einen in den Paneelen durchzuführenden Schnitts wiedergibt;
- Einführen eines Füllmaterials mit einem fluidischen und/oder ähnlichen Verhalten und geeignet, um hart zu werden, in das Paneel (30) über die gesamte Längsentwicklung der Rille in einer vorbestimmten Menge, um mindestens das Volumen zwischen den Platten nahe der Rille zu füllen,
- Warten und/oder Bewirken des Härtens des Füllmaterials,
- Ausführen des mindestens einen Schnitts entlang seiner vorbestimmten Entwicklung, wobei der Schnitt zum Erhalten des Umleimens der Schnittkanten eine schmalere Breite als die minimale Breite des gehärteten Füllmaterials aufweist.

2. Verfahren gemäß Patentanspruch 1, **dadurch gekennzeichnet, dass** die Rillen auf einer Platte ausgeführt werden, wobei neben der entgegengesetzten Platte eine vorbestimmte Dicke der Wabenmittel (3) benachbart der entgegengesetzten Platte unberührt gelassen werden.

3. Verfahren gemäß Patentanspruch 1 oder 2, **dadurch gekennzeichnet, dass** die Wabenmittel seitlich zur Rille nach dem Ausführen der Rille und vor dem Einführen des Füllmaterials weit geöffnet werden.

4. Verfahren gemäß einem der vorhergehenden Patentansprüche, **dadurch gekennzeichnet, dass** die Innenseite der Rillen mittels warmer Luft oder Infrarotstrahlung oder ähnlichem vor der Einführung erwärmt werden, um das Härten zu beschleunigen.

5. Verfahren gemäß einem der vorhergehenden Patentansprüche, **dadurch gekennzeichnet, dass** eine Mehrzahl von Rillen und Einführungen ausgeführt werden, während das vorher eingeführte Füllmaterial hart wird.

6. Verfahren gemäß einem der vorhergehenden Patentansprüche, **dadurch gekennzeichnet, dass** eine Mehrzahl von geraden Rillen mittels eines Scheibenschneidmittels ausgeführt wird oder eine Mehrzahl von geraden und/oder kurvenförmigen Rillen wird durch Fräsmittel ausgeführt, beispielsweise durch ein Schaftfräswerkzeug.

7. Verfahren gemäß einem der vorhergehenden Patentansprüche, **dadurch gekennzeichnet, dass** Seitenhaltemittel verwendet werden, die mit den Paneelrändern zusammenpassen, in denen die Rillen enden, um ein seitliches Ausfließen des Füllmaterials im Fluidzustand zu verhindern.

8. Verfahren gemäß einem der vorhergehenden Patentansprüche, **dadurch gekennzeichnet, dass** ein Füllmaterial von der sich ausdehnenden Art verwendet wird.

9. Verfahren gemäß Patentanspruch 8, **dadurch gekennzeichnet, dass** nach dem Füllen der Rillen mit dem sich ausdehnenden Material die Rillen bis zur Verfestigung des Materials mindestens mittels eines geschlossenen Ringgurts verschlossen werden.

10. Verfahren gemäß Patentanspruch 9, **dadurch gekennzeichnet, dass** ein Antiklebegurt verwendet wird, um das Anhaften des sich ausdehnenden Materials daran zu verhindern.

11. Verfahren gemäß Patentanspruch 9, **dadurch gekennzeichnet, dass** auf die Rillenränder ein Haftband aufgebracht wird, um das Anhaften des sich ausdehnenden Materials am Gürtel zu verhindern.

12. Verfahren gemäß einem der vorhergehenden Patentansprüche, **dadurch gekennzeichnet, dass** ein Füllmaterial verwendet wird, das einen Festanteil mit einem Verhalten ähnlich dem Fluidverhalten sowie einen Fluidhärtungsanteil aufweist.

13. Verfahren gemäß Patentanspruch 12, **dadurch gekennzeichnet, dass** ein körniger Festanteil verwendet wird, vorzugsweise aus hohlem Glasgranulat.

14. Verfahren gemäß Patentanspruch 12, **dadurch gekennzeichnet, dass** ein Fluidanteil vom harzigen Typ verwendet wird, beispielsweise vom nicht expandierenden oder leicht expandierenden Zwei-Komponententyp mit sehr niedriger Viskosität.

15. Verfahren gemäß einem der Patentansprüche 12-14, **dadurch gekennzeichnet, dass** der körnige Festanteil in mindestens eine Rille eingeführt wird und nachfolgend in die mindestens eine Rille eine vorbestimmte Menge an Fluidanteil eingeführt wird.

16. Verfahren gemäß Patentanspruch 15, **dadurch gekennzeichnet, dass** eine vorbestimmte Menge an körnigem Festanteil in der Rille verteilt wird oder dass die Öffnung eines Magazins, das den körnigen Festanteil enthält, über die Platte (31) mit der Rille gleitet, um den körnigen Festanteil mittels Gravitation vom Magazin in die Rille fallen zu lassen.

17. Verfahren gemäß einem der vorhergehenden Patentansprüche, **dadurch gekennzeichnet, dass** ein Fluid-Zweikomponenten-Material verwendet wird, das schnell hart wird und unmittelbar vor der Einführung gemischt wird.

18. Maschine zum Ausführen von Schnitten mit Umleimem mittels des Verfahrens gemäß einem der vorhergehenden Patentansprüche in einem Wabenverbundpaneel (30), wobei jedes mit zwei Platten (31) bereitgestellt ist, die die Hauptseiten definieren und gegenseitig parallel gesperrt und beabstandet sind durch ein Wabenmittel (32), wobei die Maschine (1) umfasst:
- ein Unterstützungsmittel (2), das geeignet ist, um mit mindestens einer Platte (31) zum Unterstützen des entsprechenden Paneels (30) zusammenzupassen,
- erste Schneidmittel (3), die geeignet sind, um auf einer der mit den Unterstützungsmitteln zusammenpassenden Platte entgegengesetzten Platte (31) mindestens eine Rille einer vorbestimmten Breite und mit einer Tiefe auszuführen, die mindestens gleich der Plattendicke und schmaler als die Paneeldicke ist, wobei die Mittellinie der Rille die vorbestimmte Entwicklung des mindestens einen im Paneel durchzuführenden Schnitts wiedergibt,
- Einführmittel (4), die geeignet sind, um in das Paneel (30) entlang der gesamten Längsentwicklung der Rille ein Füllmaterial einzuführen mit einem Fluidverhalten und/oder ähnlichem Verhalten und das geeignet ist, hart zu werden, in einer vorbestimmten Menge, um mindestens das Volumen zwischen den Platten nahe der Rille zu füllern,
- zweite Schneidmittel (5) zum Durchführen mindestens eines Schnitts entlang seiner vorbestimmten Entwicklung, wobei der Schnitt eine schmalere Breite als die minimale Breite des ausgehärteten Füllmaterials aufweist, um die Randverleimung der Schnittränder zu erhalten.

19. Maschine gemäß Patentanspruch 18, **dadurch gekennzeichnet, dass** das Unterstützungsmittel (2) bereitgestellt ist mit Vorrückmitteln für die mindestens eine Platte (31) und mit Seitenhaltemitteln (9), beispielsweise seitenschließende Ringgurte, die geeignet sind, um mit den seitlichen Rändern der Platte (31) parallel zum Vorrücken davon zusammen zu passen.

20. Maschine gemäß Patentanspruch 19, **dadurch gekennzeichnet, dass** die ersten Schneidmittel (3) ein Scheibenmittel umfassen, das mindestens in einer Schneidrichtung entlang eines ersten Arms (6) beweglich ist, der in Bezug auf das Paneel (30) in der Vorrückrichtung quer angeordnet ist.

21. Maschine gemäß Patentanspruch 20, **dadurch gekennzeichnet, dass** die Einführmittel (4) einen Mixer und ein Auftragsgerät des Fluid-Füllmaterials umfassen, die entlang des ersten Querarms (6) oder entlang eines zweiten Querarms (16) beweglich sind, der stromabwärts des ersten Arms (6) in Bezug auf die Vorrückrichtung des mindestens einen Paneels (30) angeordnet ist.

22. Maschine gemäß Patentanspruch 20 oder 21, **dadurch gekennzeichnet, dass** sie Heizmittel (7) des Heißlufttyps oder eines ähnlichen Typs umfasst, die geeignet sind, das Paneel innerhalb der Rille zu erwärmen, und die mindestens entlang des ersten Querarms (6) unmittelbar stromaufwärts des Verteilers der Einführmittel (4) in Bezug auf die Schneidrichtung beweglich sind.

23. Maschine gemäß einem der Patentansprüche 20-22, **dadurch gekennzeichnet, dass** sie ein Band-Entrollmittel (8) umfasst, das geeignet ist, die Rille haftend an den Rändern davon zu versperren, und das entlang des ersten Querarms (6) unmittelbar stromabwärts des Verteilers der Einführmittel (4) in Bezug auf die Schneidrichtung beweglich ist.

24. Maschine gemäß einem der Patentansprüche 21-23, **dadurch gekennzeichnet, dass** sie eine geschlossene Ringgurtpresse (11) aufweist, die stromabwärts des ersten Querarms (6) angeordnet ist, um das sich ausdehnende Füllmaterial am Auslaufen aus der Rille zu hindern.

25. Maschine gemäß Patentanspruch 24, **dadurch gekennzeichnet, dass** das zweite Schneidmittel (5) stromabwärts der Gurtpresse (11) angeordnet ist und vom scheibenähnlichen Klingentyp ist.

26. Maschine gemäß Patentanspruch 19, **dadurch gekennzeichnet, dass** die Vorrückmittel vorzugsweise vom Schiebetyp sind.

27. Maschine gemäß Patentanspruch 20, **dadurch gekennzeichnet, dass** die ersten Schneidmittel (3) ein Fräsmittel umfassen, das quer und längs durch einen ersten Arm (6) mit zwei Freiheitsgraden bewegt wird, der in Bezug auf die Vorrückrichtung des Paneels (30) quer angeordnet ist.

28. Maschine gemäß Patentanspruch 27, **dadurch gekennzeichnet, dass** die Einführmittel (4) ein Quermagazin (12) für einen Festanteil des Materials mit einem Verhalten ähnlich dem Fluidverhalten aufweisen, das stromabwärts der ersten Schneidmittel (3) angeordnet ist und mit einer Öffnung versehen ist, die geöffnet ist in einem zusammenpassenden Gleitzustand in Bezug auf die Platte (31), die mit der mindestens einen Rille bereitgestellt ist, wobei die Einführmittel (4) weiterhin einen Mixer und ein Auftragsgerät (13) eines Fluidanteils des Füllmaterials aufweisen, die quer und längs durch einen zweiten Arm (16) mit zwei Freiheitsgraden bewegt werden, der quer in Bezug auf die Vorrückrichtung des Paneels (30) und stromabwärts des Quermagazins (12) in Bezug auf die Vorrückrichtung des Paneels (30) angeordnet ist.

29. Maschine gemäß Patentanspruch 27, **dadurch gekennzeichnet, dass** die zweiten Schneidmittel (5) ein Fräsmittel zum Schneiden umfassen, das quer und längs durch einen dritten Arm (26) bewegt wird, der quer in Bezug auf die Vorrückrichtung des Paneels (30) und stromabwärts der Einführmittel (4) angeordnet ist.

30. Maschine gemäß einem der Patentansprüche 27-29, **dadurch gekennzeichnet, dass** sie mindestens zwei Seitenhaltemittel (9) umfasst, beispielsweise seitenschließende Ringgurte, die geeignet sind, um mit den Seitenrändern (31) parallel zur Vorrückrichtung davon zusammenzupassen.

31. Maschine gemäß einem der Patentansprüche 20-23 oder einem der Patentansprüche 27-30, **dadurch gekennzeichnet, dass** sie ein weit öffnendes Mittel (10) umfasst, das stromabwärts der ersten Schneidmittel (3) in Bezug auf die Schneidrichtung befestigt ist und geeignet ist, um die Wabenmittel (32) seitlich in Bezug auf die Rille weit zu öffnen.

32. Maschine gemäß Patentanspruch 31, **dadurch gekennzeichnet, dass** die weit öffnenden Mittel (10) ein Paar weit öffnender Grate der Wabenmittel umfassen, das wie ein "V" mit dem Scheitel in der Schneidrichtung oder wie ein Keil mit dem Scheitel in der Schneidrichtung angeordnet ist.

33. Maschine gemäß den vorherigen Patentansprüchen 18 bis 32, **dadurch gekennzeichnet, dass** sie Steuermittel umfasst, die programmiert sein können, um mindestens die Arme (6, 16, 26), die Schneidmittel (3, 5) sowie die Einführmittel (3) zu steuern, um quer und/oder längs gerade oder gebogene Schnitte mit Umleimem zu machen.

34. Maschine gemäß Patentanspruch 33, **dadurch gekennzeichnet, dass** die Steuermittel ein Programm zum Ausführen eines geraden oder irgendwie geformten Schnitts mit Umleimern umfassen, auch eines kreisförmigen oder irgendwie geschlossen geformten Schnitts.

## Revendications

1. Procédé d'exécution d'une découpe avec des bandes latérales dans un panneau sandwich alvéolé (30) comptant deux plaques (31) qui définissent les faces principales des panneaux et bloquées mutuellement parallèlement et espacées par un moyen alvéolé (3) comprenant :
- l'exécution sur l'une des plaques (31) d'au moins une rainure d'une largeur prédéterminée et d'une profondeur au moins égale à l'épaisseur de la plaque et inférieure à l'épaisseur du panneau, la ligne médiane de la rainure reproduisant le développement prédéterminé de l'au moins une découpe à exécuter dans les panneaux ;
- l'introduction dans le panneau (30) à travers tout le développement longitudinal de ladite rainure d'un matériau de remplissage ayant un comportement fluidique, et/ou similaire, et apte à se durcir, dans une quantité prédéterminée pour remplir au moins le volume entre les plaques près de la rainure ;
- l'attente et/ou l'incitation du durcissement du matériau de remplissage ;
- l'exécution de l'au moins une découpe le long de son développement prédéterminé, ladite découpe ayant une largeur inférieure à la largeur minimum du matériau de remplissage durci pour obtenir les bandes latérales des bords coupés.

2. Procédé selon la revendication 1, **caractérisé par** la réalisation des rainures sur une plaque, en laissant telle quelle, en plus de la plaque opposée, une épaisseur prédéterminée du moyen alvéolé (3) adjacent à ladite plaque opposée.

3. Procédé selon la revendication 1 ou 2, **caractérisé par** la grande ouverture du moyen alvéolé latéralement à la rainure après l'exécution de la rainure et avant l'introduction du matériau de remplissage.

4. Procédé selon l'une quelconque des revendications précédentes, **caractérisé par** le chauffage de l'intérieur des rainures au moyen d'air chaud ou d'un rayonnement infrarouge ou similaire, avant l'introduction afin d'accélérer le durcissement.

5. Procédé selon l'une quelconque des revendications précédentes, **caractérisé par** l'exécution d'une pluralité de rainures et d'introductions pendant que le matériau de remplissage introduit précédemment durcit.

6. Procédé selon l'une quelconque des revendications précédentes, **caractérisé par** l'exécution d'une pluralité de rainures rectilignes au moyen d'un moyen de découpe à disque ou l'exécution d'une pluralité de rainures rectilignes et/ou courbes par des moyens de fraisage, par exemple des outils de fraisage d'extrémité.

7. Procédé selon l'une quelconque des revendications précédentes, **caractérisé par** l'alignement, par des moyens de retenue latéraux, des bords de panneau dans lesquels se terminent les rainures, afin d'empêcher un débordement par les côtés du matériau de remplissage dans l'état fluide.

8. Procédé selon l'une quelconque des revendications précédentes, **caractérisé par** l'utilisation d'un matériau de remplissage du type expansible.

9. Procédé selon la revendication 8, **caractérisé par** l'occlusion, après le remplissage des rainures avec le matériau expansible, desdites rainures jusqu'à la solidification du matériau au moins au moyen d'une courroie annulaire fermée.

10. Procédé selon la revendication 9, **caractérisé par** l'utilisation d'une courroie anti-adhérente afin d'empêcher l'adhérence du matériau expansible sur celle-ci.

11. Procédé selon la revendication 9, **caractérisé par** l'application sur les bords des rainures d'un ruban adhésif afin d'empêcher l'adhérence du matériau expansible sur la courroie.

12. Procédé selon l'une quelconque des revendications précédentes, **caractérisé par** l'utilisation d'un matériau de remplissage comprenant une portion solide, ayant un comportement semblable au comportement fluidique, et une portion fluide durcissable.

13. Procédé selon la revendication 12, **caractérisé par** l'utilisation d'une portion solide granulaire faite de préférence de granulés de verre creux.

14. Procédé selon la revendication 12, **caractérisé par** l'utilisation d'une portion fluide de type résineux, par exemple un bicomposant d'une très faible viscosité non expansible ou de faible expansibilité.

15. Procédé selon l'une quelconque des revendications 12 à 14, **caractérisé par** l'introduction de la portion granulaire solide dans au moins une rainure, puis l'introduction successive dans ladite au moins une rainure d'une quantité prédéterminée de la portion fluide.

16. Procédé selon la revendication 15, **caractérisé par** la distribution d'une quantité prédéterminée de la portion granulaire solide dans la rainure ou le coulissement de l'ouverture d'une trémie, contenant ladite portion granulaire solide, sur la plaque (31) comportant la rainure, afin de laisser la portion granulaire solide tomber par gravité de la trémie dans la rainure.

17. Procédé selon l'une quelconque des revendications précédentes, **caractérisé par** l'utilisation d'un matériau à bicomposant fluide qui durcit rapidement, mélangé immédiatement avant son introduction.

18. Machine d'exécution de découpes avec des bandes latérales par le procédé selon l'une quelconque des revendications précédentes, dans un panneau sandwich alvéolé (30) comptant deux plaques (31) qui définissent les faces principales des panneaux et bloquées mutuellement parallèlement et espacées par un moyen alvéolé (32) ; ladite machine (1) comprenant :
- un moyen de support (2) adapté pour correspondre à au moins une plaque (31) pour supporter le panneau respectif (30) ;
- un premier moyen de découpe (3) adapté pour exécuter, sur une plaque (31) opposée à la plaque correspondant au moyen de support, au moins une rainure d'une largeur prédéterminée et d'une profondeur égale au moins à l'épaisseur de la plaque et inférieure à l'épaisseur du panneau, la ligne médiane de ladite rainure reproduisant le développement prédéterminé de l'au moins une découpe à exécuter dans le panneau ;
- un moyen d'introduction (4) adapté pour introduire dans le panneau (30) tout le long du développement longitudinal de ladite rainure un matériau de remplissage ayant un comportement fluidique, et/ou un comportement similaire, et apte à se durcir, dans une quantité prédéterminée pour remplir au moins le volume entre les plaques près de la rainure ;
- un second moyen de découpe (5) pour exécuter au moins une découpe le long de son développement prédéterminé, ladite découpe ayant une largeur inférieure à la largeur minimum du matériau de remplissage durci, pour obtenir les bandes latérales des bords coupés.

19. Machine selon la revendication 18, **caractérisée en ce que** le moyen de support (2) est doté d'un moyen d'avancée de l'au moins une plaque (31) et de moyens de retenue latéraux (9), par exemple des courroies annulaires fermées latérales, adaptées pour correspondre aux bords latéraux de la plaque (31) parallèles à l'avancée de celle-ci.

20. Machine selon la revendication 19, **caractérisée en ce que** le premier moyen de découpe (3) comprend un moyen de disque mobile au moins dans un sens de découpe le long d'un premier bras (6) placé transversalement par rapport au sens d'avancée du panneau (30).

21. Machine selon la revendication 20, **caractérisée en ce que** le moyen d'introduction (4) comprend un mixeur et un distributeur du matériau de remplissage fluide, mobile le long du premier bras transversal (6) ou le long d'un second bras transversal (16) placé en aval du premier bras (6) relativement au sens d'avancée de l'au moins un panneau (30).

22. Machine selon la revendication 20 ou 21, **caractérisée en ce qu'**elle comprend un moyen de chauffage (7), du type à air chaud ou similaire, adapté pour chauffer le panneau à l'intérieur de la rainure, et mobile au moins le long du premier bras transversal (6) immédiatement en amont du distributeur du moyen d'introduction (4) relativement au sens de découpe.

23. Machine selon l'une quelconque des revendications 20 à 22, **caractérisé en ce qu'**elle comprend un moyen de déroulement de ruban (8), adapté pour occlure la rainure adhérant aux bords de celui-ci, et mobile le long du premier bras transversal (6) immédiatement en aval du distributeur du moyen d'introduction (4) relativement au sens de découpe.

24. Machine selon l'une quelconque des revendications 21 à 23, **caractérisé en ce qu'**elle comprend une presse de courroie annulaire fermée (11) et placée en aval du premier bras transversal (6) afin d'empêcher le matériau de remplissage expansible de déborder de la rainure.

25. Machine selon la revendication 24, **caractérisée en ce que** le second moyen de découpe (5) est placé en aval de la presse de courroie (11) et est du type à lame de disque.

26. Machine selon la revendication 19, **caractérisée en ce que** le moyen d'avancée est de préférence du type à poussée.

27. Machine selon la revendication 20, **caractérisée en ce que** le premier moyen de découpe (3) comprend un moyen de fraisage déplacé transversalement et longitudinalement par un premier bras (6) ayant deux degrés de liberté placé transversalement relativement au sens d'avancée du panneau (30).

28. Machine selon la revendication 27, **caractérisée en ce que** le moyen d'introduction (4) comprend une trémie transversale (12) d'une portion solide du matériau ayant un comportement similaire au comportement fluidique, placée en aval du premier moyen de découpe (3) et ayant une ouverture ouverte dans une condition coulissante correspondante relativement à la plaque (31) dotée de l'au moins une rainure ; ledit moyen d'introduction (4) comprenant en outre un mixeur et un distributeur (13) d'une portion fluide du matériau de remplissage et déplacés transversalement et longitudinalement au moyen d'un deuxième bras (16) ayant deux degrés de liberté placé transversalement relativement au sens d'avancée du panneau (30) et en aval de la trémie transversale (12) relativement au sens d'avancée du panneau (30).

29. Machine selon la revendication 27, **caractérisée en ce que** le second moyen de découpe (5) comprend un moyen de découpe par fraisage, déplacé transversalement et longitudinalement par un troisième bras (26) placé transversalement par rapport au sens d'avancée du panneau (30) et en aval du moyen d'introduction (4).

30. Machine selon l'une quelconque des revendications 27 à 29, **caractérisée en ce qu'**elle comprend au moins deux moyens de retenue latéraux (9), par exemple des courroies annulaires fermées latérales, adaptées pour correspondre aux bords latéraux (31) parallèles au sens d'avancée de ceux-ci.

31. Machine selon l'une quelconque des revendications 20 à 23, ou l'une quelconque des revendications 27 à 30, **caractérisée en ce qu'**elle comprend un moyen de grande ouverture (10), fixé en aval du premier moyen de découpe (3) relativement au sens de découpe, et adapté pour ouvrir en grand le moyen alvéolé (32) latéralement relativement à la rainure.

32. Machine selon la revendication 31, **caractérisée en ce que** le moyen de grande ouverture (10) comprend une paire d'ailettes de grande ouverture du moyen alvéolé placées en "V" ayant le sommet dans le sens de la découpe ou une cale au sommet dans le sens de la découpe.

33. Machine selon les revendications précédentes 18 à 32, **caractérisé en ce qu'**elle comprend un moyen de commande qui peut être programmé afin de commander au moins les bras (6, 16, 26), le moyen de découpe (3, 5) et le moyen d'introduction (3) afin de réaliser des découpes transversales et/ou longitudinales rectilignes ou courbes avec des bandes latérales.

34. Machine selon la revendication 33, **caractérisée en ce que** le moyen de commande comprend un programme pour réaliser une découpe avec des bandes latérales rectilignes ou de n'importe quelle forme, également une découpe circulaire ou une découpe fermée d'une forme quelconque.
